(19) Europäisches Patentamt
European Patent Office
Office européen des brevets

(11) Veröffentlichungsnummer: **0 271 802 B1**

# (12) EUROPÄISCHE PATENTSCHRIFT

(45) Veröffentlichungstag der Patentschrift: **01.04.92**

(51) Int. Cl.$^5$: **C08F 287/00**, C08F 283/06, C08F 283/12, C09D 4/00

(21) Anmeldenummer: **87118122.8**

(22) Anmeldetag: **08.12.87**

## (54) Polyethersiloxan-Pfropfpolymerisate.

(30) Priorität: **19.12.86 DE 3643459**

(43) Veröffentlichungstag der Anmeldung:
**22.06.88 Patentblatt 88/25**

(45) Bekanntmachung des Hinweises auf die Patenterteilung:
**01.04.92 Patentblatt 92/14**

(84) Benannte Vertragsstaaten:
**BE CH DE FR GB IT LI NL SE**

(56) Entgegenhaltungen:
**EP-A- 0 084 145**
**EP-A- 0 188 895**
**FR-A- 2 398 084**
**US-A- 3 342 766**

(73) Patentinhaber: **BAYER AG**
**W-5090 Leverkusen 1 Bayerwerk(DE)**

(72) Erfinder: **Alberts, Heinrich, Dr.**
**Schulstrasse 1a**
**W-5068 Odenthal(DE)**
Erfinder: **Alteweier, Hans-Bernd, Dr.**
**Friedrich-Engels-Strasse 13**
**W-5090 Leverkusen 1(DE)**

EP 0 271 802 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Pfropfpolymerisate, ein Verfahren zu ihrer Herstellung und ihre Verwendung als Verlaufsmittel für wäßrige, lösungsmittelhaltige und pulverförmige Lacke und Beschichtungssysteme.

Polyalkylenoxidorganopolysiloxan-Block- und -Kammpolymere, im folgenden auch einfach Polyethersiloxane genannt, sind aufgrund ihrer Grenzflächenaktivität wichtige Hilfsmittel für verschiedenste technische Anwendungen (vgl. W. Noll, Chemie und Technologie der Silicone, Verlag Chemie, Weinheim, 2. Auflage, 1968, S. 322-323 und S. 493-495).

Neben ihrer Anwendung als Stabilisatoren für Schaumstoffe, als Dismulgatoren und Antistatikmittel für Textilien u.a., werden solche Polymere insbesondere als Hilfsmittel in wäßrigen oder lösungsmittelhaltigen Lack- oder Beschichtungssystemen eingesetzt.

Die US-A-3 342 766 beschriebt die Verwendung von Polyalkylenoxid-Organopolysiloxan-Blockcopolymeren bei der Herstellung von wäßrigen Anstrichbinderemulsionen, wie beispielsweise Vinylacetat- oder Styrol-Acrylatemulsionen. Lacke, die auf Basis solcher polyethersiloxanhaltiger Emulsionen hergestellt sind, weisen im Vergleich zu polyethersiloxanfreien Lacken eine verbesserte Oberflächenhärte und einen verbesserten Verlauf beim Anstrich auf.

Trotz augenscheinlicher Qualitätsvorteile hat dieses Polymerisationsverfahren den Nachteil, daß die Anstrichbinder rezepturbedingt eine bestimmte Menge des Verlaufsmittels enthalten, wodurch man in Anwendungsrezepturen festgelegt ist. Mehr Freiheitsgrade für den anwender beiten Verlaufmittel, die in sehr geringer Konzentration dem Lack oder Beschichtungsmittel hinzugefügt das gewünschte verbesserte Eigenschaftsbild vermitteln.

Die Aufgabe der Erfindung bestand darin, wirksame Hilfsmittel, insbesondere hochaktive Verlaufs-, Netz- und Glättemittel für wäßrige und lösungsmittelhaltige Lacke oder Beschichtungssysteme sowie Pulverlacke und Wirbelsinterbeschichtungsmittel bereitzustellen, die in sehr geringen Anwendungskonzentrationen die lacktechnischen eigenschaften der entsprechendenen Anstrich- oder Beschichtungsmittel signifikant verbessern.

Die Aufgabe wird durch die Bereitstellung von Pfropfpolymerisaten aus Polyalkylenoxidorganopolysiloxan-Block und/oder -Kammpolymeren und perfluoralkylsubstituierten Allylverbindungen gelöst.

Gegenstand der Erfindung sind
Pfropfpolymerisate bestehend aus

a) 0,1 bis 99,9 Gew.-% Polyalkylenoxidorganopolysiloxan-Block- und/oder Kammpolymereinheiten und

b) 99,1 bis 0,1 Gew.-% Einheiten aus polymerisierten perfluoralkylsubstituierten Allylverbindungen,

wobei in den Pfropfpolymerisaten Strukturelemente der folgenden allgemeinen Formel enthalten sind:

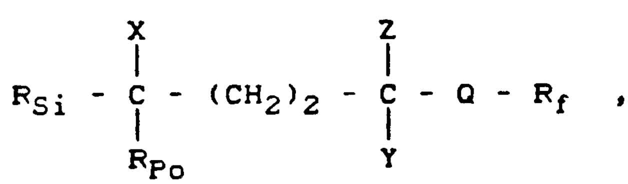

worin

| | |
|---|---|
| X | ein Wasserstoffatom oder eine Methylgruppe, |
| Y und Z | unabhngig voneinander ein Wasserstoffatom oder einen Alkylrest mit 1 bis 18 Kohlenstoffatomen, |
| Q | einen zweiwertigen Alkylrest mit 1 bis 12 Kohlenstoffatomen, einen zweiwertigen organischer Rest der allgemeinen Formel |

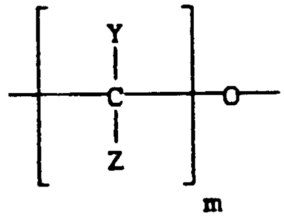 ,

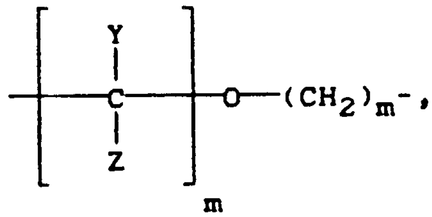 ,

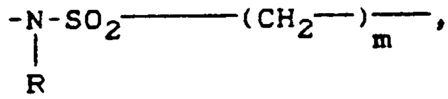 ,

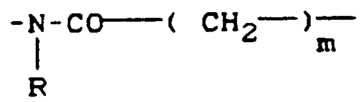

oder eine

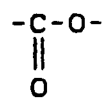

-Gruppe bedeuten, wobei

Y und Z die obenstehende Bedeutung haben

R für ein Wasserstoffatom oder einen Alkylrest mit 1 bis 8 Kohlenstoffatomen steht und

m eine ganze Zahl von 0 bis 6 bedeutet und worin

$R_f$ für einen perfluorierten aliphatischen, gegebenenfalls verzweigten Rest mit 1 bis 20 Kohlenstofatomen steht und der Rest außer Fluoratomen höchstens ein Wasserstoff- oder Chloratom auf zwei Kohlenstoffatome enthalten kann, wobei der perfluorierte aliphatische Rest durch Sauerstoffatome unterbrochen sein kann,

$R_{Si}$ für einen Polyalkylenoxidorganopolysiloxan-Block- und/oder Kammpolymerrest steht und

$R_{Po}$ für eine Polyalkylenoxidkette des Polyalkylenoxidorganopolysiloxan-Block-und/oder Kammpolymers steht

und wobei

in den Pfropfpolymerisaten mehr als 50 Gew.-% perfluoralkylsubstituierte Allylmonomere monomolekular an die Alkylenoxideinheiten der Polyalkylenoxidorganopolysiloxan-Block- und/oder Kammpolymeren addiert sind.

Bevorzugt sind solche Pfropfpolymerisate, die einen Anteil an Polyalkylenoxidorganopolysiloxan-Block- und/oder Kammpolymereinheiten von 35 bis 95 Gew.-% und einen Anteil an polymerisierten perfluoralkylsubstituierten Allylverbindungen 65 bis 5 Gew.-% aufweisen.

Pfropfpolymerisate, in denen mehr als 70 Gew.-% perfluoralkylsubstituierte Allylmonomere monomolekular an die Alkylenoxideinheiten der Polyalkylenoxidorganopolysiloxan-Block- und/oder Kammpolymeren addiert sind, werden besonders bevorzugt.

Besonders bevorzugt sind auch Pfropfpolymerisate mit den genannten Strukturelementen, in denen der Rest $R_f$ für eine Perfluoralkylgruppe der Formel $CF_3(CF_2)_n$ steht, wobei n eine ganze Zahl von 2 bis 19

bedeutet.

Die Polyalkylenoxidorganopolysiloxan-Block- und/oder Kammpolymereinheiten können erfindungsgemäß eine beliebige Zusammensetzung und Struktur aufweisen. Eine die Erfindung nicht limitierende Auswahl davon ist beispielsweise in W. Noll, Chemie und Technologie der Silicone, Verlag Chemie GmbH, Weinheim, 2. Auflage, 1968, S. 321-323 und in den dort aufgeführten Literaturzitaten beschrieben.

Die polymerisierten perfluoralkylsubstituierten Allyleinheiten bestehen erfindungsgemäß aus Einheiten der allgemeinen Formel

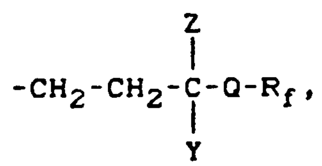

worin die Substituenten Z, Y, Q und $R_f$ die oben stehende Bedeutung haben.

Bevorzugt sind dabei solche Einheiten, in denen Q für eine

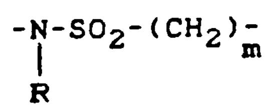

-Gruppe
steht.

Eine besonders bevorzugte Einheit weist die folgende Zusammensetzung auf:

$-CH_2-CH_2-CH_2-NH-SO_2-(CF_2)_nCF_3$,

wobei

n für eine ganze Zahl von 3 bis 19 steht.

In den erfindungsgemäßen Pfropfpolymerisaten sind die perfluoralkylsubstituierten Allyleinheiten in der Regel mit einem zu Sauerstoffatomen $\alpha$-ständigen Kohlenstoffatom der Polyalkylenoxidketten der Polyalkylenoxidorganopolysiloxan-Block- und/oder Kammpolymereinheiten verknüpft.

Die erfindungsgemäßen Pfropfpolymerisate sind durch radikalische Polymerisation von perfluoralkylsubstituierten Allylverbindungen in Gegenwart von Polyalkylenoxidorganopolysiloxan-Block- und/oder Kammpolymeren erhältlich. Es wurde gefunden, daß bei der radikalischen Polymerisationsreaktion die Allylverbindung praktisch quantitativ durch Pfropfreaktion mit den Polyalkylenoxidketten der Polyalkylenoxidorganopolysiloxan-Block-und/oder Kammpolymeren umgesetzt werden. Daß diese Reaktion praktisch quantitativ erfolgt, ist überraschend, da bekannt ist, daß Allylverbindungen im allgemeinen nur schwer und unvollständig polymerisieren (vgl. G. Henrici-Olive, S. Olive, Verlag Chemie, Weinhein, 1969, S. 69). Es sind auch Verfahren zur Herstellung von Allylcopolymerisation durch radikalische Polymerisation, beispielsweise nach der US-A-2 894 938 und der US-A-2 940 946, bekannt. Die Nachteile dieser Verfahren sind, daß die Monomerumsätze gering sind, der Radikalbildnerverbrauch hoch ist und die Molekulargewichte der erhaltenen Produkte sehr niedrig sind.

Diese beschriebenen Nachteile treten bei der Herstellung der erfindungsgemäßen Pfropfpolymerisate überraschenderweise nicht auf.

Gegenstand der Erfindung ist somit auch ein Verfahren zur Herstellung der erfindungsgemäßen Pfropfpolymerisate, welches dadurch gekennzeichnet ist, daß in Gegenwart von 0,1 bis 99,9 Gew.-% eines Polyalkylenoxidorganopolysiloxan-Block- und/oder Kammpolymeren 99,9 bis 0,1 Gew.-% eines perfluoralkylsubstituierten Allylmonomeren der allgemeinen Formel

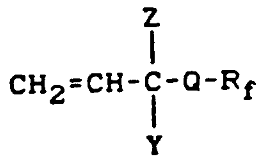

radikalisch polymerisiert werden, wobei die Substituenten Z, Y, Q und $R_f$ die oben stehende Bedeutung haben.

Bevorzugt ist ein Verfahren zur Herstellung der erfindungsgemäßen Pfropfpolymerisate, bei dem in Gegenwart von 35 bis 95 Gew.-% eines Polyalkylenoxidorganopolysiloxan-Block- und/oder Kammpolymeren 65 bis 5 Gew.-% eines perfluoralkylsubstituierten Allylmonomeren der genannten allgemeinen Formel radikalisch polymerisiert werden.

Eine vorteilhafte Variante des erfindungsgemäßen Verfahrens besteht darin, die radikalische Polymerisation so auszuführen, daß mehr als 50 Gew.% des perfluoralkylsubstituierten Allylmonomeren monomolekular an die Alkylenoxideinheiten der Polyalkylenoxidorganopolysiloxan-Block- und/oder Kammpolymere addiert werden.

Vorzugsweise wird die radikalische Polymerisation so ausgeführt, daß mehr als 70 Gew.-% des perfluoralkylsubstituierten Allylmonomeren monomolekular an die Alkylenoxideinheiten oder Polyalkylenoxidorganopolysiloxan-block- und/oder Kammpolymeren addiert werden.

Dies kann über eine gezielte Auswahl der Reaktionsbedingungen, beispielsweise der Reaktionstemperatur, der Radikalbildnerkonzentration, oder der Art der Lösungsmittel erfolgen.

Die zur Herstellung der erfindungsgemäßen Pfropfpolymerisate eingesetzten perfluoralkylsubstituierten Allylverbindungen können beispielsweise nach den in den GB-A-818 576, US-A-2 519 983, US-A-2 732 398, US-A-3 704 311 und DE-A-20 04 962 beschriebenen Verfahren erhalten werden.

Besonders vorteilhaft können perfluorsubstituierte Allylether-, Allylester- und N-Allylsulfonamidderivate beim erfindungsgemäßen Verfahren eingesetzt werden, wobei N-Allylsulfonamidderivate bevorzugt sind. Besonders bevorzugt sind aus der Gruppe der N-Allylsulfonamidderivate Verbindungen, die die folgende Zusammensetzung aufweisen:

$CH_2 = CH\text{-}CH_2\text{-}NH\text{-}SO_2\text{-}(CF_2)_nCF3$,

wobei

n für eine ganze Zahl von 3 bis 19 steht.

Die zur Herstellung der erfindungsgemäßen Pfropfpolymerisate eingesetzten Polyalkylenoxidorganopolysiloxan-Block- und/oder Kammpolymere sind nach in der Technik gebräuchlichen Verfahren, wie sie z.B. in W. Noll, Chemie und Technologie der Silicone, Verlag Chemie, Weinheim, 2. Auflage, 1968, S. 321-323, beschrieben sind, erhältlich. Beispielsweise können solche Polymere durch Umsetzung von diacetoxyendgruppensubstituierten organosiloxanen mit OH-terminierten Polyalkylenoxiden oder Polyalkylenoxidblöcken enthaltenden Polyestern erfolgen. Ferner ist die Synthese der Block- und/oder Kammpolymeren auch durch die Addition von allylterminierten Polyalkylenoxiden oder Polyalkylenoxidabkömmlingen an Si-H-Gruppen enthaltende Organopolysiloxane möglich. Diese Addition wird in bekannter Weise, zumeist mit Platinkatalysatoren, katalysiert.

Die radikalisch initierte Polymerisation der perfluoralkylenoxidorganopolysiloxan-Block- und/oder Kammpolymeren kann mit Hilfe von Radikalbindern, energiereicher Strahlung oder thermisch gestartet werden. Vorzugsweise werden als Radikalbildner Azo- und/oder Peroxidinitiatoren in einer Größenordnung von 0,05 bis 15 Gew.-% eingesetzt.

Beispielsweise seien als Radikalbildner das Azo-di-isobutylonitril der Azo-di-valeronitril, ihre Ester- und Iminoesterderivate, tert. Butylperpivalat, tert. Butylperoctoat, di-tert. Butylperoxid und Benzoylperoxid genannt. Es können aber auch weitere allgemein gebräuchliche peroxidische oder nichtperoxidische Radikalbildner, wie beispiesweise phenylsubstituierte Ethanderivate, eingesetzt werden.

Die radikalische Polymerisation ist mit oder ohne Zusatz von Lösungsmitteln, in wäßriger Lösung, Suspension oder Emulsion durchführbar. Vorzugsweise wird sie in Lösung durchgeführt. Als Lösungsmittel werden dabei Kohlenwasserstoffe und Fluorkohlenwasserstoffe eingesetzt.

Vorzugsweise wird die radikalische Polymerisation im Temperaturbereich von 80 bis 250 ° C durchgeführt; sie kann aber in jedem anderen Temperaturbereich gestartet und durchgeführt werden, wobei sich der Fachmann nach den bekannter oder auch neuen Initierungssystemen orientiert.

Falls gewünscht, können in den fertigen Pfropfpolymeransatz Antioxidantien of Basis von Phenol-, Diamin- oder Phosphorderivaten, UV-Absorber, Biocide oder Füllstoffe der gebräuchlichen Art, d.h. Kreide, Talkum, Kieselsäuren, anorganische und organische Pigmente usw. eingetragen werden.

Die erfindungsgemäßen Pfropfpolymerisate sind je nach ihrer Zusammensetzung wasserlöslich oder -unlöslich, bei Raumtemperatur fest oder flüssig. Viele der wasserlöslichen Pfropfpolymere sind überraschenderweise auch in Lösungsmitteln wie Toluol löslich, was diesen Produkten interessante Anwendungsperspektiven eröffnet.

Ein weiterer Gegenstand der Erfindung ist die Verwendung der erfindungsgemäßen Pfropfpolymerisate und der Pfropfpolymerisate, die nach dem erfindungsgemäßen Verfahren erhältlich sind, als Verlaufsmittel für wäßrige und/oder lösungsmittelhaltige Lacke und Beschichtungssysteme, für Pulverlacke und Wirbelsinterbeschichtungsmittel. Bereits in sehr kleinen Anwendungskonzentrationen verbessern die erfindungsgemäßen Pfropfpolymerisate die Verlaufseigenschaften der genannten Lacke und Beschichtungssysteme signifikant.

Neben den Verlaufseigenschaften verbessern sie zusätzlich auch die Haft- und Kratzfestigkeit von Lacken. Bei der Verwendung als Verlaufsmittel in Pulverlacken empfielt sich die Zugabe der erfindungsgemäßen Pfropfpolymerisate bei der Formulierung bzw. oder Herstellung der Pulverlacke.

Durch Verwendung der erfindungsgemäßen Pfropfpolymerisate in Beschichtungsmitteln/-systemen können verschiedenste Beschichtungen auf Substrate wie Papier, Leder, Textilien, Metall und Kunststoffe in vorteilhafter Weise aufgebracht werden.

Die folgenden Beispiele erläutern die Herstellung der erfindungsgemäßen Pfropfpolymerisate und ihre Verwendung als Verlaufsmittel in Lacken und Beschichtungssystemen.

Wenn nicht anders vermerkt, sind die Mengenangaben als Gewichtsanteile bzw. Gewichtsprozente zu verstehen.

In der Tabelle 1 sind die für die Beispiele eingesetzten Polyethersiloxane dargestellt. (Der Ausdruck Polyethersiloxan wird hier als synonym für die Polyalkylenorganopolysiloxan-Block- und/oder Kammpolymeren verwendet). Die Tabelle 2 gibt die einzelnen Beispiele und die Einsatzmenge der Komponenten wieder und in Tabelle 3 sind die Viskosität und die Löslichkeit in Wasser und Toluol der nach den Beispielen erhaltenen Pfropfpolymerisate zusammengestellt.

Die Herstellung der erfindungsgemäßen Pfropfpolymerisate erfolgt nach folgender allgemeiner Arbeitsvorschrift:

Unter Stickstoff wird die in den Beispielen (Tabelle 2) angegebene Mischung aus perfluoralkylsubtituierten Allylmonomeren und Polyethersiloxan auf 140 °C erhitzt. Die Lösung des Peroxids in Testbenzin (Siepunkt 155 - 185 °C) wird innerhalb von 2 Stunden hinzugegeben. Anschließend wird 2 Stunden bei 140 °C und 1 Stunde bei 150 °C nachgerührt. Danach werden die flüchtigen Anteile im Hochvakuum bei 150 °C abgezogen. Der Rückstand wird abgekühlt und wie angegeben (Tabelle 3) charakterisiert.

**Tabelle 1**

| Polyethersiloxan-Nr. | Schematische Struktur |
|---|---|
| 1 | 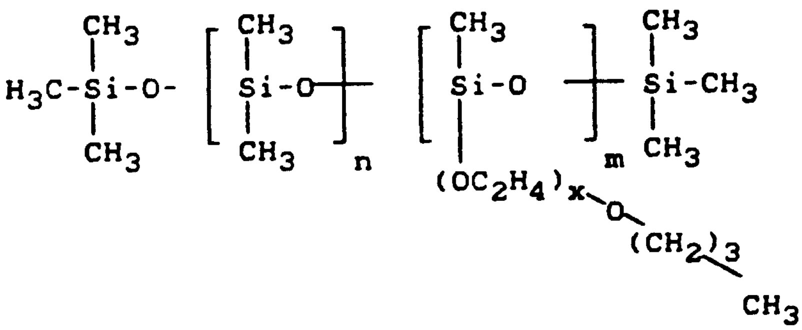 n = 65, m = 3, x = 48 |
| 2 | 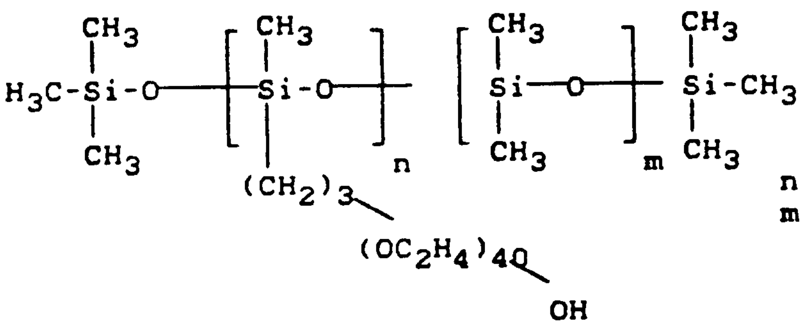 n = 6, m = 24 |
| 3 | 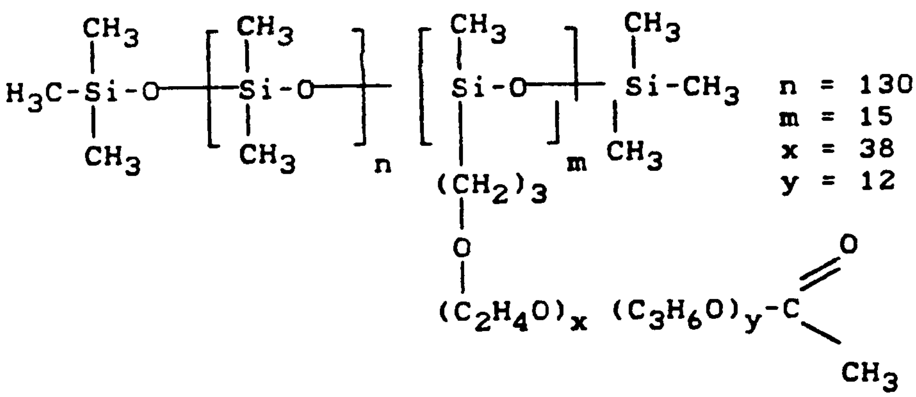 n = 130, m = 15, x = 38, y = 12 |

**Tabelle 1 ( Fortsetzung)**

| Polyethersiloxan-Nr. | Schematische Struktur |
|---|---|
| 4 | 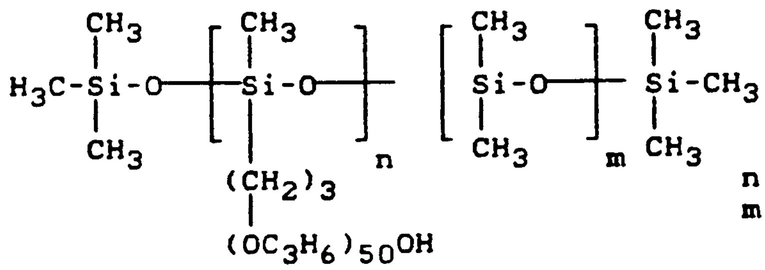 n = 6<br>m = 24 |

**Tabelle 2**

| Beispiel | Polyethersiloxan | | | | perfluoralkyl-substituierte Allylverbindung | | Testbenzin | di-tert.-Butylperoxid |
|---|---|---|---|---|---|---|---|---|
| Nr. | 1 | 2 | 3 | 4 | A | B | | |
| 1 | 200 | - | - | - | 50 | - | 100 | 5 |
| 2 | - | 200 | - | - | 50 | - | 100 | 5 |
| 3 | - | - | 200 | - | 50 | - | 100 | 5 |
| 4 | - | 100 | - | - | - | 200 | 200 | 10 |
| 5 | - | - | - | 200 | 50 | - | 100 | 5 |

perfluoralkylsubstituierte Allylverbindung

$CH_2=CH-CH_2-NH-SO_2-(CF_2)_nCF_3$

A : n = 7

B : n = 3

Tabelle 3

| Beispiel Nr. | Viskosität bei 23°C (mPa.s) | Löslichkeit in Wasser | Löslichkeit in Toluol |
|---|---|---|---|
| 1 | 3200 | + | + |
| 2 | fest | + | + |
| 3 | 2500 | + | + |
| 4 | fest | (+) | + |
| 5 | 2780 | - | + |

\+ bedeutet löslich in Wasser und Toluol
(+) bedeutet wenig löslich
\- bedeutet unlöslich

Verwendungsbeispiele der nach der allgemeinen Arbeitsschrift erhaltenen und in Tabelle 2 und 3 charakterisierten Pfropfpolymerisate:

Verwendungs-Beispiel 1

Verwendung als Verlaufsmittel in einem wasserverdünnbaren Polyester-Alkydallack (Alkydal R 35 W ®, Handelsprodukt der Bayer AG Leverkusen:

Eine 10%ige wäßrige Lösung der nach Beispiel 1, 2 und 3 hergestellten Pfropfpolymerisate wird mit dem Polyester-Alkydallack in verschiedenen Konzentrationen abgemischt. Mit diesem Lack wird ein mit Motorenöl verunreinigtes Stahlblech lackiert.

Der wasserfeuchte Lackfilm wird 20 Minuten bei 130 ° C eingebrannt.

Die erhaltenen Lackierungen werden mit entsprechenden Lackierungen bei Verwendung handelsüblicher Lackadditive auf Basis niedermolekularer n-butylacrylat-Copolymere (beispielsweise Modaflow ®, Fa. Monsanto, USA) und ohne die Verwendung der erfindungsgemäßen Pfropfpolymerisate verglichen. Beurteilt werden der Verlauf und die Oberflächenstruktur der Lackierung, wobei die Oberflächenstruktur anhand des Auftretens von sogenannten Kratern und/oder des sogenannten Orangenschaleneffektes beurteilt wird. Der Orangenschaleneffekt (die Oberfläche der Lackierung gleicht der Struktur einer Orangenschale) und das Auftreten von Kraten (die Oberfläche der Lackierung zeigt kraterförmige Gebilde) sind (Oberflächenstörungen der Lackierung.

Ohne Verlaufsmittel ist keine zusammenhängende Lackschicht erhältlich. Bei der Verwendung handelsüblicher Verlaufsmittel auf Basis niedermolekularer n-Butylacrylat-Copolymere werden 0,3 bis 0,5 Gew.-% benötigt un einen kraterfreien Verlauf der Lackschicht zu gewährleisten.

Bei Verwendung der erfindungsgemäßen Pfropfpolymerisate werden bereits mit einem Anteil von 0,04 Gew.-% der Pfropfpolymerisate aus den Beispielen 1, 2 und 3 in dem Lack zusammenhängende und kraterfreie Lackschichten ohne Orangeschaleneffekt erhalten.

Verwendungs-Beispiel 2

Verwendung als Verlaufsmittel für UV-härtende Lösungslacke auf Basis von bisacrylatmodifizierten Polyesterharzen:

Als Beispiel für einen UV-härtenden Lösungslack auf Baiss von bisarylatmodifizierten Polyesterharzen wurde ein sogenannter highsolid-Klarlack mit einem Festkörpergehalt von 72 Gew.-%, Typ Baryoflex®, Handelsprodukt der Chem. Fabrik Aarberg/Schweiz, mit den erfindungsgemäßen Pfropfpolymerisaten nach Beispiel 4 und 5 in einer Menge von 0,04 Gew.-% versetzt. Mit diesem Lack wurden Furnierhölzer lackiert und UV-gehärtet. Zum Vergleich wurde ein entsprechender Lack ohne Verlaufsmittel verwendet.

Ohne Zusatz der erfindungsgemäßen Verlaufsmittel zeigt die Lackierung nach der Aushärtung den Orangeschaleneffekt, was aus einen nicht optimalen Verlauf hindeutet. Bei Zusatz der erfindungsgemäßen Pfropfpolymerisate wird ein hervorragender Verlauf des Lacks ohne Orangeschaleneffekt und damit eine einwandfreie Lackschicht erzielt, wobei gleichzeitig auch eine verbesserte Haft-und Kratzfestigkeit der Lackierung erreicht wird.

Verwendungs-Beispiel 3

Verwendung als Verlaufsmittel für Pulverlackbeschichtungen:

Als Pulverlack wurde ein durch Verseifung eines Ethylen-Vinylacetat-Copolymerisats mit 32 Gew.-% Vinylacetat erhaltenes Ethylen-Vinylalkoholcopolymerisat mit einer Teilchengröße von kleiner 100 $\mu$m eingesetzt.

Dieses Pulver wurde mit dem erfindungsgemäßen Pfropfpolymerisat nach Beispiel 3 in unterschiedlichen Mengen versetzt.

Das Pulver wurde elektrostatisch auf Stahlbleche von 10 x 10 cm Kantenlänge und 1 mm Dicke versprüht und im Wärmeschrank bei 200 °C 10 Minuten nachgeheizt. Der elektrostatische Pulverauftrag erfolgte in einer handelsüblichen Anlage mit einer Spannung von -30kV und Förderluft von 3,5 bar.

Zum Vergleich wurde der entsprechende Pulverlack ohne Zusatz von Verlaufsmittel und Pulverlack mit herkömmlichen Verlaufsmitteln auf Basis niedermolekularer n-Butylacrylat-Copolymere wie angegeben versprüht.

Pulverlacke mit den erfindungsgemäßen Pfropfpolymerisaten liefern bereits bei einem Gehalt von 0,03 Gew.-% des Pfropfpolymerisats, einen kraterfreien, hervorragen-Verlauf auch über die Kanten der Stahlbleche. Die erzielte Schichtdicke beträgt durchschnittlich 80 $\mu$m.

Ohne Verlaufsmittel wird keine kraterfreie Beschichtung erhalten. Mit Verlaufsmittlen auf Basis von niedermolekularen n-Butylacrylat-Copolymeren wird erst bei einem Zusatz von mindestens 0,5 Gew.-% bezogen auf das Ethylen-Vinylalkoholcopolymerisat ein einwandfreier, kraterfreier Verlauf erreicht.

**Patentansprüche**

**1.** Pfropfpolymerisate bestehend aus

a) 0,1 bis 99,9 Gew.-% Polyalkylenoxidorganopolysiloxan-Block- und/oder Kammpolymereinheiten und

b) 99,9 bis 0,1 Gew.-% Einheiten aus polymerisierten perfluoralkylsubstituierten Allylverbindungen, wobei in den Pfropfpolymerisaten Strukturelemente der folgenden allgemeinen Formel enthalten sind:

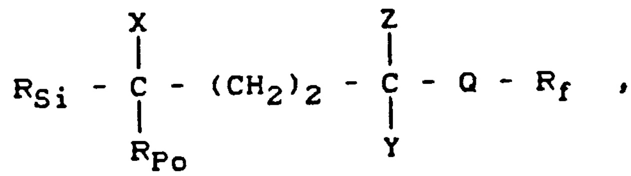

worin

X ein Wasserstoffatom oder eine Methylgruppe,

Y und Z unabhängig voneinander ein Wasserstoffatom oder einen Alkylrest mit 1 bis 18 Kohlenstoffatomen,

Q einen zweiwertigen Alkylrest mit 1 bis 12 Kohlenstoffatomen, einen zweiwertigen organischer Rest der allgemeinen Formel

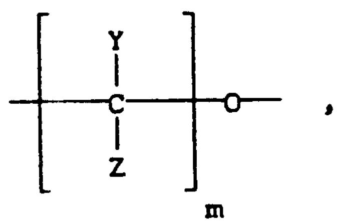

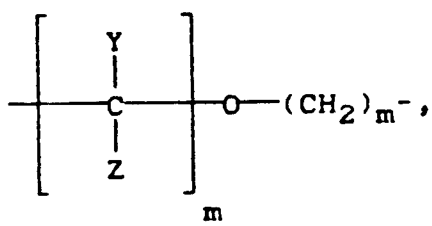

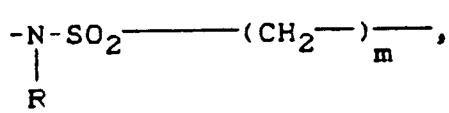

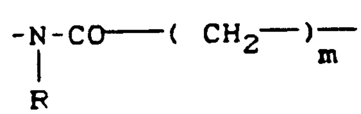

oder eine

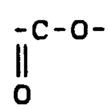

-Gruppe bedeuten, wobei

Y und Z die obenstehende Bedeutung haben

R für ein Wasserstoffatom oder einen Alkylrest mit 1 bis 18 Kohlenstoffatomen steht und

m eine ganze Zahl von 0 bis 6 bedeutet und worin

$R_f$ für einen perfluorierten aliphatischen, gegebenenfalls verzweigten Rest mit 1 bis 20 Kohlenstoffatomen steht und der Rest außer Fluoratomen höchstens ein Wasserstoff- oder Chloratom auf zwei Kohlenstoffatome enthalten kann, wobei der perfluorierte aliphatische Rest durch Sauerstoffatome unterbrochen sein kann,

$R_{Si}$ für einen Polyalkylenoxidorganopolysiloxan-Block-und/oder Kammpolymerrest steht und

$R_{Po}$ für eine Polyalkylenoxidkette des Polyalkylenoxidorganopolysiloxan-Block-und/oder Kammpolymers steht

und wobei

in den Pfropfpolymerisaten mehr als 50 Gew.-% perfluoralkylsubstituierte Allylmonomere monomolekular an die Alkylenoxideinheiten der Polyalkylenoxidorganopolysiloxan-Block-und/oder Kammpolymeren addiert sind.

**2.** Pfropfpolymerisate gemäß Anspruch 1, dadurch gekennzeichnet, daß der Anteil der Polyalkylenoxidorganopolysiloxan-Block- und/oder Kammpolymereinheiten 35 bis 95 Gew.-% und der Anteil der polymerisierten perfluoralkylsubstituierten Allylverbindungen 65 bis 5 Gew.-% beträgt.

**3.** Pfropfpolymerisate gemäß Anspruch 1, dadurch gekennzeichnet, daß mehr als 70 Gew.-% perfluoralkylsubstituierte Allylmonomere monomolekular an die Alkylenoxideinheiten der Polyalkylenoxidorganopolysiloxan-Block- und/oder Kammpolymeren addiert sind.

**4.** Pfropfpolymerisate gemäß einem oder mehrerer der Ansprüche 1 bis 3, dadurch gekennzeichnet, daß der Rest $R_f$ für eine Perfluoralkylgruppe der Formel $CF_3(CF_2)_n$- steht, wobei n eine ganze Zahl von 2 bis 19 bedeutet.

**5.** Verfahren zur Herstellung der Pfropfpolymerisate gemäß einem oder mehrerer der Ansprüche 1 bis 4, dadurch gekennzeichnet, daß in Gegenwart von 0,1 bis 99,9 Gew.-% eines Polyalkylenoxidorganopolysiloxan-Block- und/oder Kammpolymeren 99,9 bis 0,1 Gew.-% eines perfluoralkylsubstituierten Allylmonomeren der allgemeinen Formel

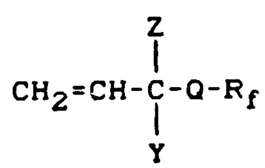

radikalisch polymerisiert werden, wobei die Substituenten Z, Y, Q und $R_f$ die obenstehende Bedeutung gemäß Anspruch 1 haben.

**6.** Verfahren gemäß Anspruch 5, dadurch gekennzeichnet, daß in Gegenwart von 35 bis 95 Gew.-% eines Polyalkylenoxidorganopolysiloxan-Block- und/oder Kammpolymeren 65 bis 5 Gew.-% eines perfluoroalkylsubstituierten Allylmonomeren der genannten allgemeinen Formel radikalisch polymerisiert werden.

**7.** Verfahren gemäß Anspruch 5 oder 6, dadurch gekennzeichnet, daß mehr als 50 Gew.-% des perfluoralkylsubstituierten Allylmonomeren monomolekular an die Alkylenoxideinheiten der Polyalkylenoxidorganopolysiloxan-Block- und/oder Kammpolymere addiert werden.

**8.** Verfahren gemäß einem oder mehrerer der Ansprüche 5 bis 7, dadurch gekennzeichnet, daß mehr als 70 Gew.-% des perfluoralkylsubstituierten Allylmonomeren monomolekular and die Alkylenoxideinheiten der Polyalkylenoxidorganopolysiloxan-Block- und/oder Kammpolymeren addiert werden.

**9.** Verwendung der Pfropfpolymerisate gemäß einem oder mehrerer der Ansprüche 1 bis 4 und der Pfropfpolymerisate, die nach einem Verfahren gemäß einem oder mehrerer der Ansprüche 5 bis 8 erhältlich sind, als Verlaufsmittel für wäßrige und/oder lösungsmittelhaltige Lacke und Beschichtungssysteme, für Pulverlacke und Wirbelsinterbeschichtungsmittel.

**Claims**

**1.** Graft polymers consisting of

a) 0.1 to 99.9% by weight polyalkylene oxide organopolysiloxane block and/or comb polymer units and

b) 99.9 to 0.1% by weight units of polymerised perfluoroalkyl-substituted allyl compounds, the graft polymers containing structural elements corresponding to the following general formula

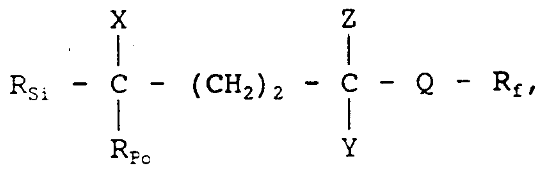

in which

| | |
|---|---|
| X | is a hydrogen atom or a methyl group, |
| Y and Z | independently of one another represent a hydrogen atom or an alkyl radical containing 1 to 18 carbon atoms, |
| Q | is a difunctional alkyl radical containing 1 to 12 carbon atoms, |
| | a difunctional organic radical corresponding to the general formula |

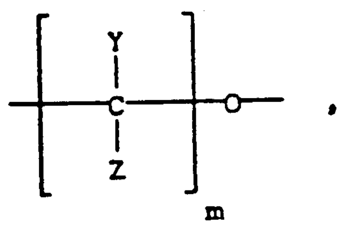

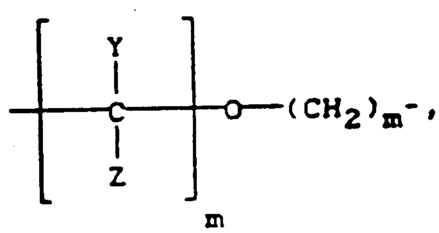

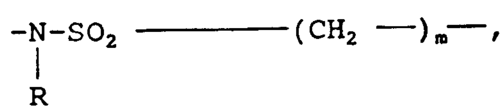

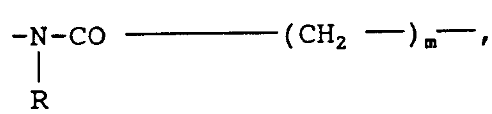

or a

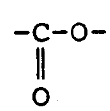

group, where

Y and Z are as defined above,

R is a hydrogen atom or an alkyl radical containing 1 to 18 carbon atoms and

m is an integer of 0 to 6 and in which

$R_f$ is a perfluorinated aliphatic, optionally branched radical containing 1 to 20 carbon atoms and, in additon to fluorine atoms, may contain at most one hydrogen atom or chlorine atom to two carbon atoms; the perfluorinated aliphatic radical may be interrupted by oxygen atoms,

$R_{Si}$ is a polyalkylene oxide organopolysiloxane block and/or comb polymer unit and

$R_{Po}$ is a polyalkylene oxide chain of the polyalkylene oxide organopolysiloxane block and/or comb polymer, more than 50% by weight perfluoroalkyl-substituted allyl monomers in the graft polymers being monomolecularly added onto the alkylene oxide units of the polyalkylene oxide organopolysiloxane block and/or comb polymers.

**2.** Graft polymers as claimed in claim 1, characterized in that the percentage content of the polyalkylene oxide organopolysiloxane block and/or comb polymer units is from 35 to 95% by weight and the percentage content of the polymerized perfluoroalkyl-substituted allyl compounds from 65 to 5% by weight.

**3.** Graft polymers as claimed in claim 1, characterized in that more than 70% by weight perfluoroalkyl-substituted allyl monomers are monomolecularly added onto the alkylene oxide units of the polyalkylene oxide organopolysiloxane block and/or comb polymers.

**4.** Graft polymers as claimed in one or more of claims 1 to 3, characterized in that the substituent $R_f$ is a perfluoroalkyl group corresponding to the formula $CF_3(CF_2)_n$- where n is an integer of 2 to 19.

**5.** A process for the production of the graft polymers claimed in one or more of claims 1 to 4, characterized in that 99.9 to 0.1% by weight of a perfluoroalkyl-substituted allyl monomer corresponding to the following general formula

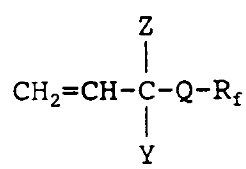

where the substituents Z, Y, Q and $R_f$ are as defined above, are radical-polymerized in the presence of 0.1 to 99.9% by weight of a polyalkylene oxide organopolysiloxane block and/or comb polymer.

**6.** A process as claimed in claim 5, characterized in that 65 to 5% by weight of a perfluoroalkyl-substituted allyl monomer corresponding to the above general formula are radical-polymerized in the presence of 35 to 95% by weight of a polyalkylene oxide organopolysiloxane block and/or comb polymer.

**7.** A process as claimed in claim 5 or 6, characterized in that more than 50% by weight of the perfluoroalkyl-substituted allyl monomer are monomolecularly added onto the alkylene oxide units of the polyalkylene oxide organopolysiloxane block and/or comb polymers.

**8.** A process as claimed in one or more of claims 5 to 7, characterized in that more than 70% by weight of the perfluoroalkyl-substituted allyl monomers are monomolecularly added onto the alkylene oxide units of the polyalkylene oxide organopolysiloxane block and/or comb polymers.

**9.** The use of the graft polymers claimed in one or more of claims 1 to 4 and the graft polymers obtainable by the process claimed in one or more of claims 5 to 8 as flow control agents for water-based and/or solvent-containing lacquers and coating systems, for powder lacquers and fluidized-bed coating compositions.

**Revendications**

**1.** Polymères greffés constitués par

a) de 0,1 à 99,9% en poids d'unités de polymères séquencés et/ou en forme de peigne d'oxyde de polyalkylène-organopolysiloxane

et

b) de 99,9 à 0,1% en poids d'unités constituées par des composés allylés polymérisés et substitués par des groupes perfluoroalkyle,

dans lesquels les polymères greffés contiennent des éléments de structure répondant à la formule générale ci-après :

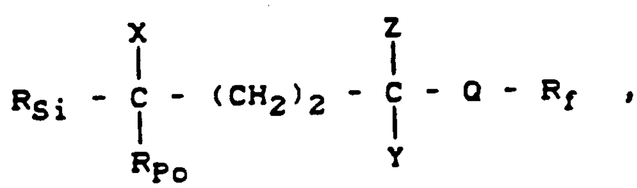

dans laquelle

X représente un atome d'hydrogène ou un groupe méthyle,

Y et Z représentent, indépendamment l'un de l'autre, un atome d'hydrogène ou un radical alkyle contenant de 1 à 18 atomes de carbone,

Q représente un radical alkyle bivalent contenant de 1 à 12 atomes de carbone, un radical organique bivalent répondant à la formule générale

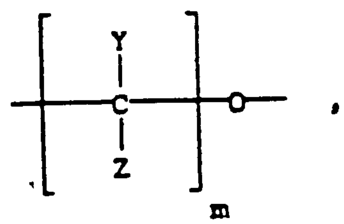

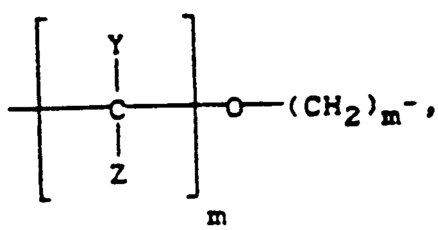

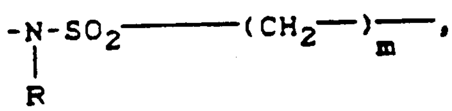

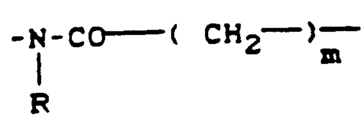

ou encore un groupe

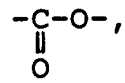

où

Y et Z ont la signification mentionnée ci-dessus,

R représente un atome d'hydrogène ou un radical alkyle contenant de 1 à 18 atomes de carbone, et

m représente un entier de 0 à 6 et où

$R_f$ représente un radical aliphatique perfluoré éventuellement ramifié contenant de 1 à 20 atomes de carbone, le radical pouvant contenir, outre les atomes de fluor, au maximum un atome d'hydrogène ou un atome de chlore pour deux atomes de carbone, le radical aliphatique perfluoré pouvant être interrompu par des atomes d'oxygène,

$R_{Si}$ représente un radical du polymère séquencé et/ou en forme de peigne d'oxyde de polyalkylène-organopolysiloxane et

$R_{Po}$ représente une chaîne d'oxyde de polyalkylène du polymère séquencé et/ou en forme de peigne d'oxyde de polyalkylène-organopolysiloxane

et où

dans les polymères greffés, on ajoute plus de 50% en poids de monomères d'allyle substitués par des groupes perfluoroalkyle par voie monomoléculaire aux unités d'oxyde d'alkylène des polymères séquencés et/ou en dents de peigne d'oxyde de polyalkylène-organopolysiloxane.

2. Polymères greffés selon la revendication 1, **caractérisés en ce que** la fraction en unités de polymère séquencé et/ou en forme de peigne d'oxyde de polyalkylène-organopolysiloxane s'élève de 35 à 95% en poids et la fraction des composés allylés polymérisés, substitués par des groupes perfluoroalkyle, s'élève de 65 à 5% en poids.

3. Polymères greffés selon la revendication 1, **caractérisés en ce qu'**on ajoute plus de 70% en poids de monomères d'allyle substitués par des groupes perfluoroalkyle, par voie monomoléculaire, aux unités d'oxyde d'alkylène des polymères séquencés et/ou en forme de peigne d'oxyde de polyalkylène-organopolysiloxane.

4. Polymères greffés selon l'une ou plusieurs des revendications 1 à 3, **caractérisés en ce que** le radical $R_f$ représente un groupe perfluoroalkyle de formule $CF_3(CF_2)_n$-, n représentant un entier de 2 à 19.

5. Procédé pour la préparation des polymères greffés selon une ou plusieurs des revendications 1 à 4, **caractérisé en ce que,** en présence de 0,1 à 99,9% en poids d'un polymère séquencé et/ou en forme de peigne d'oxyde de polyalkylène-organopolysiloxane, on polymérise par voie radicalaire de 99,9 à 0,1% en poids d'un monomère d'allyle substitué par un groupe perfluoroalkyle, répondant à la formule générale

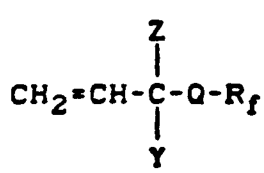

les substituants Z, Y, Q et $R_f$ ayant la signification mentionnée ci-dessus, conformément à la revendication 1.

6. Procédé selon la revendication 5, **caractérisé en ce que**, en présence de 35 à 95% en poids d'un polymère séquencé et/ou en forme de peigne d'oxyde de polyalkylène-organopolysiloxane, on polymérise par voie radicalaire, de 65 à 5% en poids d'un monomère d'allyle substitué par un groupe

perfluoroalkyle répondant à la formule générale mentionnée.

7. Procédé selon la revendication 5 ou 6, **caractérisé en ce qu'on** ajoute plus de 50% en poids du monomère d'allyle substitué par un groupe perfluoroalkyle, par voie monomoléculaire, aux unités d'oxyde d'alkylène des polymères séquencés et/ou en forme de peigne d'oxyde de polyalkylène-organopolysiloxane.

8. Procédé selon une ou plusieurs des revendications 5 à 7, **caractérisé en ce qu'**on ajoute plus de 70% en poids du monomère d'allyle substitué par un groupe perfluoroalkyle, par voie monomoléculaire, aux unités d'oxyde d'alkylène des polymères séquencés et/ou en forme de peigne d'oxyde de polyalkylène-organopolysiloxane.

9. Utilisation des polymères greffés selon une ou plusieurs des revendications 1 à 4 et des polymères greffés que l'on peut obtenir d'après un procédé selon une ou plusieurs des revendications 5 à 8, comme agents de nivellement pour des laques, des peintures, des vernis et des systèmes d'enduction aqueux et/ou contenant un solvant, pour des laques, des peintures et des vernis pulvérulents et des agents d'enduction en lit fluidisé.